# EUROPEAN PATENT APPLICATION

(11) **EP 2 476 611 A1**
(43) Date of publication of application: **18.07.2012**
(21) Application number: 10813804.1
(22) Date of filing: 03.09.2010
(51) Int. Cl.: B63B 25/04, B63B 27/25, B65G 51/03, B65G 67/60

(54) **WATER-BORNE TRANSPORTATION METHOD FOR POLYMER PELLETS**

(30) Priority: 07.09.2009 JP 2009205971
(71) Applicant: Mitsui Engineering & Shipbuilding Co., Ltd., Chuo-ku Tokyo 104-8439 (JP); Mitsui O.S.K. Lines, Ltd., Tokyo 105-8688 (JP)
(72) Inventor: TAKANO, Kotaro, Tokyo 104-8439 (JP); NAGASAWA, Masahiro, Tokyo 104-8439 (JP); MOCHIZUKI, Koji, Tokyo 104-8439 (JP); SUZUKI, Hirofumi, Tokyo 104-8439 (JP); YOKOTA, Hiroaki, Tokyo 104-8439 (JP); KAWAGOE, Yoshikazu, Tokyo 105-8688 (JP); YAMASAKI, Jin, Tokyo 105-8688 (JP); MIWA, Kohei, Tokyo 105-8688 (JP)
(74) Representative: WSL Patentanwälte Partnerschaftsgesellschaft
(86) International application number: PCT/JP2010/065130
(87) International publication number: WO 2011/027857

(57) **Abstract**

Provided is a waterborne transportation method for polymer pellets, the method being capable of efficiently transporting polymer pellets, which are particulates not desired to be damaged, contaminated, and exposed to moisture. In waterborne transportation of polymer pellets B, the polymer pellets B are stored in bulk in a cargo hold of a ship 1, 1A or of a barge, and are transported. Moreover, in order to prevent the polymer pellets B from being damaged on surfaces thereof because of collision of the polymer pellets B with a frame member of the cargo hold, a cargo hold wall, with which the polymer pellets B come into contact, of a cargo hold 10, 10A is formed smoothly while no frame member protruding toward an inside of the cargo hold 10, 10A is provided on the cargo hold wall, and the polymer pellets B are stored in bulk in the cargo hold 10, 10A, and are transported.

## Description

### TECHNICAL FIELD

The present invention relates to a waterborne transportation method for transporting polymer pellets in bulk state by waterborne transportation, the polymer pellets having been transported in bags so as not to be damaged and contaminated in the conventional art.

### BACKGROUND ART

In the oil refining industry, crude oil is distilled to be separate into petroleum gas, gasoline, naphtha (crude gasoline), kerosene, light oil, heavy oil, and asphalt, in accordance with differences of boiling points. Among these, naphtha is thermally cracked using a naphtha cracker to be changed into substances having simple structures, and each of the substances such as ethylene, propylene, butylene and the like is extracted. The ethylene, propylene, and the like are chemically reacted by polymerization reaction, in which molecules in the same substance are bonded each other, to manufacture polymers such as polyethylene or polypropylene having different properties.

The polymer pellets are formed of low-density polyethylene, high-density polyethylene, polypropylene having transparency and crystallinity (95%) and the like, which are called polymers, in pellet shape having a size of about 3 mm in diameter × 3 mm in length to 6 mm in diameter × 6 mm in length. These polymer pellets have the following physical properties: a specific gravity of about 0.9 to 1.0, a relatively small bulk specific gravity of about 0.5, and a repose angle of about 30 degrees. The low-density polyethylene has a specific gravity of about 0.92 and manufactured under high pressure. The high-density polyethylene has a specific gravity of about 0.95 and manufactured under low pressure. The polypropylene has a specific gravity of about 0.9.

Since these polymers have flammable properties, the polymer in powder state may form explosive gas mixture, leading to a dangerous condition. However, the polymer in pellet form has no dangerousness in handling at ordinary temperature. In addition, the polymer in pellet is physiologically inactive, and has no specific toxicity for human body. Moreover, the polymer in pellet has no reactivity with water, self-reactivity and explosibility, and is stable at ordinary temperature. However, when the pellets are spilled, workers may tumble by losing their footing. Therefore, spill prevention and recovery at the time of spill are important. Particularly, when pellets are spilled into water region at the time of transport, animals may swallow the pellets to be choked. Therefore, caution is required.

For many types of polymers, the molding the polymer with water attached to the surface causes defect in surfaces, defect in appearance, and deterioration in mechanical properties (strength), of the products. In addition, damages in surfaces of pellets are not desired because cracked fine polymers that are generated by the damage of the pellets become contamination. For this reason, it is desired that abrasion of pellets on an inner surface of a pipe or a cargo hold be avoided in order to prevent generation of defects in surfaces of the pellets. Moreover, since contamination of pieces of rust or paint, or other type of pellets is not desired, mixing with paint, rust or any other type should to be avoided.

For this reason, in the conventional art, in the seaborne transportation of polymer pellets by a ship, since a cargo such as polymer pellets is not desired to be damaged or contaminated, it has been considered to be not preferable from the perspective of quality management of cargos to load and transport a cargo in a cargo hold in which a frame member protrudes inside the cargo hold or the cargo is separated from outside air only by a weatherproof hatch cover like a bulk cargo ship of the conventional art. Moreover, in the cargo handling in a bulk cargo ship of the conventional art, it is also not preferable from the perspective of quality management of cargos to unload a cargo by a cargo handling grab or other equipment. In addition, since water is attached to the polymer pellets, the cargo should be transported in a dry condition. For this reason, in the conventional art, the waterborne transportation of the polymer pellets is carried out by a container transportation in which the polymer pellets are packed in bags, and containers with the bags loaded therein are transported by a container ship.

However, this transportation method using bags and containers requires human or machine operations, for the operation of packing pellets into bags, the operation of loading the bags into containers, the operation of cutting the bags to open, and the operation of taking out the pellets from the bags, and the like. Accordingly this method has a problem of low efficiency. In addition, there is another problem of waste in resources due to packing materials such as bags, used for transportation of pellets in small lots. Worldwide growth of demand of polymer pellets is expected to expand, and an effective seaborne transportation method has been desired in the industry.

Here, in this regard, as described in Japanese patent application *Kokai* publication No. 2008-260636, a transportation method and a storage method for polymer pellets have been proposed by which polymer pellets are transported with simple means with no increase in the percentage of water content in the polymer pellets, not in the waterborne transportation, but in a gas power transportation method of polymer pellets for transporting polymer pellets by using gas power together with a pressured gas flow through a transport pipe. In this method, the water content in the gas used in the gas power transportation is reduced, and the gas is compressed and supplied into the transport pipe while the dew point of the gas is adjusted to be equal to or below 0 °C.

### PRIOR ART DOCUMENT

### PATENT DOCUMENT

Patent Document 1: Japanese patent application *Kokai* publication No. 2002-260636

### SUMMARY OF THE INVENTION

### PROBLEM TO BE SOLVED BY THE INVENTION

The present invention has been made in view of the above-described circumstances, and an object of the present invention is to provide a waterborne transportation method for polymer pellets, the method being capable of effectively transporting polymer pellets, which are particulates not desired to be damaged, contaminated, and exposed to moisture.

### MEANS FOR SOLVING THE PROBLEM

A waterborne transportation method for polymer pellets according to the present invention for achieving the above-described object is a waterborne transportation method for polymer pellets, characterized by comprising, in waterborne transportation of polymer pellets, storing the polymer pellets in bulk state in a cargo hold of any one of a ship and a barge, and then transporting the polymer pellets.

According to this method, human or machine operations, for the operation of packing pellets into bags, for the operation of loading the bags into containers, for the operation of cutting the bags to open, for the operation of taking out the pellets from the bags, and the like are eliminated. Therefore, the waterborne transportation can be efficiently performed.

In the waterborne transportation method for polymer pellets, the following cargo loading and cargo unloading are performed. Specifically, in the cargo loading, polymer pellets are dropped down through an inlet port provided in an upper portion of the cargo hold, thereby being stored in the cargo hold. In the cargo unloading, the polymer pellets are discharged to a gas transport pipe by a valve from a discharge portion being provided in a lower portion of the cargo hold and each having an inclined portion, and are then transported together with gas to on-shore cargo handling equipment through the air transport pipe. With this configuration, the cargo handling can be very efficiently performed.

In the waterborne transportation method for polymer pellets, the polymer pellets are stored in bulk state in the cargo hold and then transported, the cargo hold being formed in such a manner that a cargo hold wall, with which the polymer pellets come into contact, of the cargo hold is formed smoothly while no frame member protruding toward an inside of the cargo hold is provided on the cargo hold wall, and that a discharge port having an inclined portion is provided in a lower portion of the cargo hold. With this configuration, the polymer pellets can be prevent from being damaged on surfaces thereof caused by collision of the polymer pellets with this frame member. In addition, the bulk cargo can be prevented from remaining in the cargo hold, and the cleaning of the inside of the cargo hold is also facilitated.

In the waterborne transportation method for polymer pellets, the polymer pellets are discharged to the gas transport pipe by valves from a plurality of discharge portions being provided in a lower portion of the cargo hold. With this configuration, a height of the inclined portion around the discharge port can be lowered, and the center of gravity of the cargo hold, as well as of the cargo hold with a cargo loaded therein can be lowered by a configuration of providing a plurality of discharge portions in the cargo hold. With this configuration, the stability performance against roll of the ship body can be ensured with the lowered position of the center of gravity of the ship body.

Moreover, the lateral width of each cargo hold is decreased by disposing a plurality of the cargo holds in a ship-width direction. With this configuration, moving distance of the polymer pellets due to motions of the ship body at the time of heavy weather can be reduced and the stability performance against roll can be ensured.

In addition, with these configurations, the height of the inclined portion is lowered, so that dead space formed around the outer side of the inclined portion can be reduced. Therefore, the amount of polymer pellets loaded can be increased and efficient ship transportation can be achieved.

A constant-flow discharge valve formed of a valve such as a rotary valve is provided at a discharge port in order to prevent polymer pellets from dropping down to a gas transport pipe during the storing of the polymer pellets to the cargo hold in cargo loading. In addition, polymer pellets are transported by a gas, such as air, dried air or inert gasses, and the polymer pellets in an adequate amount to the flow rate of the gas to be fed to the gas transport pipe are sent to the gas transport pipe. In other words, the polymer pellets are transported from the discharge port in the lower portion of the cargo hold to the upper deck through the gas transport pipe permanently installed on the ship body. With this configuration, the unloading can be easily and efficiently performed by transporting the polymer pellets with gas. Here, with regard to gas transport, a vacuum suction method may be used instead of the method of gas pressure transportation using air or the like.

In the transportation of the polymer pellets not desired to be exposed to moisture, dried air is supplied into the cargo hold and the gas transport pipe from an air-feeding system such as an air drying facility in an on-shore facility, a blower or a compressor, at the time of cargo handling such as cargo loading and unloading while dried air is supplied into the cargo hold from an air dryer and an air blower installed on the ship, at the time of other operations than cargo handling and at the time of transporting, in order to prevent the polymer pellets in the cargo hold from containing moisture.

In the waterborne transportation method for polymer pellets, the polymer pellets are stored in the cargo hold and then transported, the cargo hold having a cargo hold wall having such a structure as not to come into contact with liquid. In other words, the cargo hold is provided in such a way as not to be adjacent to ballast water in a ballast tank, fuel in a fuel tank, sea water or water outside of the ship body. With this configuration, generation of dew condensation on the cargo hold wall of the cargo hold can be prevented and the polymer pellets can be prevented from witting. Here, dried air is fed into the cargo hold at the time of cargo handling, thereby preventing the polymer pellets from coming into contact with air containing much moisture.

### EFFECTS OF THE INVENTION

According to the waterborne transportation method for polymer pellets of the present invention, the operation of packing in a bag, the operation of loading into a container, the operation of taking particulates out of the bag, and other operation that have been performed in the conventional art can be eliminated, so that operation efficiency at the time of transportation can be improved and mass transportation can be performed efficiently.

### BRIEF DESCRIPTION OF THE DRAWINGS

[Fig. 1] Fig. 1 is a side cross-sectional view showing arrangement of cargo holds in a bulk cargo ship of one unit type used in a waterborne transportation method for polymer pellets of an embodiment according to the present invention.
[Fig. 2] Fig. 2 is a horizontal plan view showing the arrangement of the cargo holds in the bulk cargo ship of Fig. 1.
[Fig. 3] Fig. 3 is a cross-sectional view of the ship body showing the structure of the cargo hold of the bulk cargo ship of Fig. 1.
[Fig. 4] Fig. 4 is a side cross-sectional view showing arrangement of cargo holds in a bulk cargo ship of a separated hold type used in the waterborne transportation method for polymer pellets of the embodiment according to the present invention.
[Fig. 5] Fig. 5 is a horizontal plan view showing arrangement of the cargo holds in the bulk cargo ship of Fig. 4.
[Fig. 6] Fig. 6 is a cross-sectional view of a ship body showing the structure of the cargo hold of the bulk cargo ship of Fig. 4.
[Fig. 7] Fig. 7 is a side cross-sectional view showing the structure of a bulk cargo ship having no covering structure for the cargo holds.
[Fig. 8] Fig. 8 is a cross-sectional view of a ship body showing the structure of the bulk cargo ship having no covering structure for the cargo holds.
[Fig. 9] Fig. 9 is a perspective view showing the configuration of the bulk cargo ship and on-shore cargo handling equipment for describing cargo loading and cargo unloading used in the waterborne transportation method for polymer pellets according to the present invention.

### BEST MODES FOR CARRYING OUT THE INVENTION

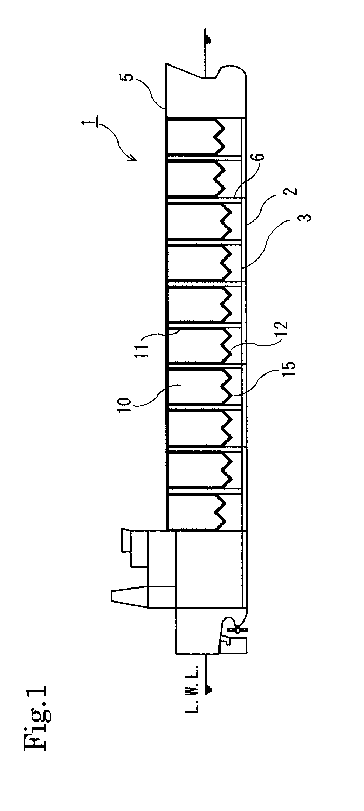

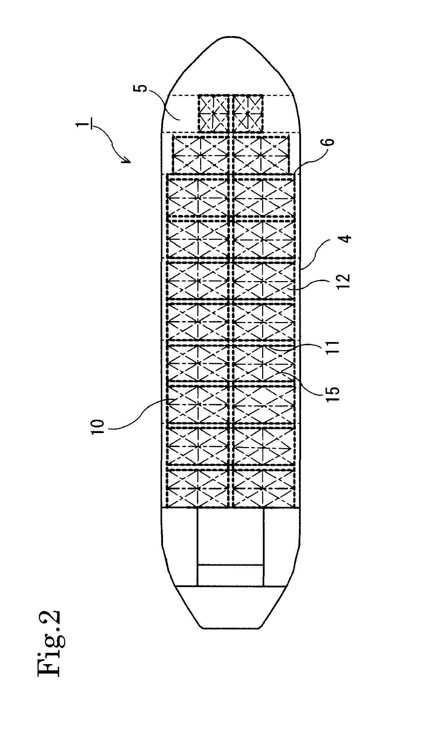

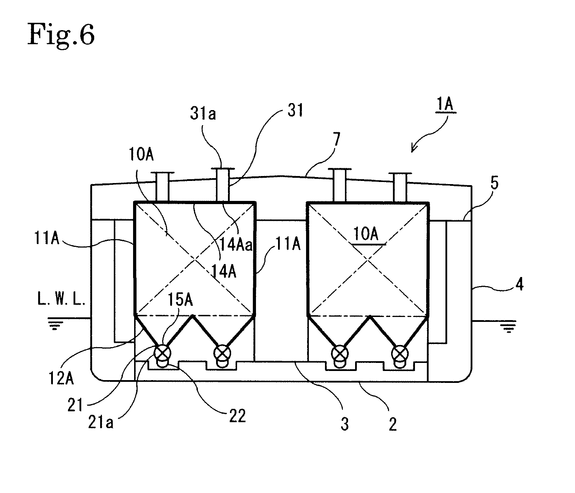

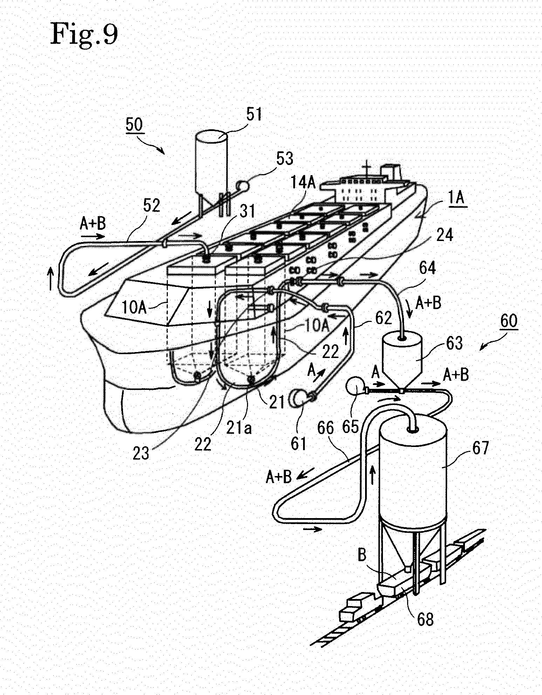

Hereinafter, a waterborne transportation method for polymer pellets according to the present invention will be described with reference to the drawings. Here, a bulk cargo ship having a propulsion system is described. However, the present invention may be applied similarly to a bulk cargo barge having no propulsion system. Here, the drawings are those for only description, and the drawings are not necessarily drawn in a dimensional ratio in a hull form or a cargo hold used for an actual ship. In addition, Fig. 9 is a drawing for describing a cargo handling method, and a ship body structure in Fig. 9 is different from ship body structures in Fig. 1 to Fig. 8 in the shape of a cargo hold and a discharge port.

First, bulk cargo ships used in the waterborne transportation method for polymer pellets in the embodiment of the present invention will be described with reference to a bulk cargo ship in which a cargo hold and a ship body are integrally formed, and a bulk cargo ship of a separated hold type in which a cargo hold is manufactured separately from the ship body and is installed on the ship body.

As shown in Fig. 1 to Fig. 3, a bulk cargo ship 1 of one unit type is configured by including cargo holds 10 in which a dry bulk cargo are loaded. In the bulk cargo ship 1 of one unit type, the cargo holds 10 are formed integrally with a ship body. In other words, sidewalls 11 and the like of the cargo holds 10 constitute part of the ship body structure.

These cargo holds 10 are arranged in rows with bulkheads 6 interposed therebetween in a ship-length direction, similar to a bulk cargo ship (a bulk carrier) of the conventional art. In addition, multiple cargo holds 10 are arranged also in a ship-width direction. With regard to the ship-width direction, the width of each cargo hold 10 is reduced by arranging the multiple cargo holds 10, so that moving range of the polymer pellets in each cargo hold 10 caused by motions of the ship body at the time of heavy weather and the like is reduced. In this way, transversal moving distance of the polymer pellets is suppressed. In addition, the stability performance against roll is ensured.

In addition, the cargo holds 10 are arranged apart from a side plating 4. Along with this, the cargo hold walls are not formed with the side plating 4 and a bottom plate 2, and the cargo holds 10 are disposed also in such a manner as not to be adjacent to the a ballast tank. In this way, the cargo hold walls are configured so as not to come into contact with liquid such as sea water, water, ballast water, and fuel. With this configuration, generation of dew condensation by cooling the cargo hold walls of the cargo holds 10 is prevented, even when ballast water is poured into the ballast tank.

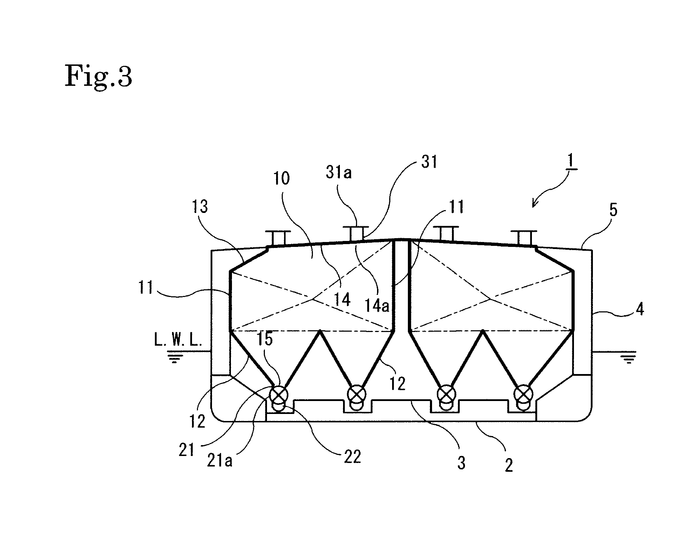

As shown in Fig. 3, each cargo hold 10 is formed as a section surrounded by sidewall portions 11, an inclined portion 13 in the upper portion at the ship lateral side, a ceiling portion 14, and inclined portions 12 in the lower portion. Each of the sidewall portions 11 is formed to extend vertically, and the ceiling portion 14 is formed of part of an upper deck 5. In addition, the ceiling portion 14 has an inlet port 14a for loading the polymer pellets. The inclined portions 12 in the lower portion are narrowed down to a discharge port 15 for discharging the cargo. In other words, each cargo hold wall is constituted of the inclined portions 12, the sidewall portions 11, the inclined portion 13, and the ceiling portion 14.

As shown in Fig. 3, each cargo hold 10 is formed as a section surrounded by the sidewall portion 11 formed to extend vertically, the inclined portion 13 in the upper portion at the ship lateral side, the ceiling portion 14 formed of part of the upper deck 5 and having the inlet port 14a for loading the polymer pellets; and the inclined portion 12 narrowed down to the discharge port 15 for discharging. Each cargo hold wall is constituted of the inclined portions 12, the sidewall portions 11, the inclined portion 13, and the ceiling portion 14.

The cargo hold wall of each cargo hold 10 is formed by providing the cargo hold wall with no frame member protruding toward the inside and with no plate edge, so that the inner surface of the cargo hold 10 is smoothly formed. Specifically, in portions, forming the sidewall portions 11, of the bulkheads 6 separating the cargo holds 10 in the fore-aft direction, frame members are all disposed outside of the cargo holds 10, that is, in spaces between the cargo holds 10. In addition, each sidewall portion 11 at the boundary where the cargo holds 10 face each other in the lateral direction is not formed by a single plate provided with frame members, but constituted of two sidewall portions 11 with frame members sandwiched therebetween. For the other cargo hold walls, frame members are disposed outside the cargo hold 10. In this way, the amount of residue of the polymer pellets can be reduced. Moreover, the residue can be washed away by cleaning with water or compressed air because there is no shadow area. As a result, contamination at the time of loading a new cargo can be prevented.

In addition, the cargo hold wall of each cargo hold 10 is preferably formed by using a rust-resistant material, for example, clad steel (pressure bonded steel), which is obtained by bonding two types of metals having different properties, and more preferably by using a rust-proof metal, such as stainless steel (SUS) material, as the metal in the inner surface side. This makes it possible to transport also polymer pellets that are not desired to come into contact with rust.

An inlet pipe 31 is provided at the inlet port 14a in the upper portion of each cargo hold 10. Each inlet pipe 31 is provided with a connection flange 31a, thereby being formed to be capable of being connected to a bulk cargo pipe on the landward side at the time of cargo loading. At the time of cargo loading, a cargo loading pipe (52 in Fig. 9) extending from the on-shore cargo handling equipment is connected to this inlet pipe 31 and the polymer pellets are dropped down naturally to be stored in the cargo hold 10. This inlet port 14a is preferably provided in the center of the inclined portion 12, that is, just above the discharge port 15 so that the polymer pellets can be stored in the cargo hold 10 evenly.

In addition, a valve is provided at the discharge port 15 of the discharge portion provided with the inclined portion 12 in the lower portion of the cargo hold 10, so that the polymer pellets being stored into the cargo hold at cargo loading are prevented from dropping down to a gas transport pipe 22. This valve is formed of a constant-flow discharge valve 21a such as a rotary valve. The gas transport pipe 22 is connected to the discharge port 15 through a discharge pipe 21 having this constant-flow discharge valve 21a such a rotary valve. At the time of cargo unloading, the polymer pellets in the cargo hold 10 are slid on the inclined portion 12 by gravity to move to the discharge port 15 while the amount of the polymer pellets is adjusted to an amount transportable through the gas transport pipe 22 by the constant-flow discharge valve 21a. In this way, the polymer pellets are discharged to the gas transport pipe 22. The polymer pellets discharged into this gas transport pipe 22 are transported to the on-shore cargo handling equipment by gas transport. With regard to this gas transport, a transportation method with gas pressure using air or the like is used. Alternatively, a vacuum suction system may be used instead of the transport system with gas pressure.

Here, since the polymer pellets are not desired to be exposed to moisture, dried air is fed to the gas transport pipe 22. In this case, at the time of cargo handling such as loading and unloading, dried air is supplied into the cargo holds 10 and the gas transport pipes 22 from an air-feeding system including an air drying facility, a blower, or a compressor in the on-shore facility. On the other hand, at a time other than cargo handling and at the time of transporting, dried air is supplied into the cargo holds 10 from an air dryer and a blower installed on the ship. By these configurations, the polymer pellets in the cargo holds 10 are prevented from containing moisture. Here, in the case of the vacuum suction system, a vacuum pump is used instead of the air-feeding system.[0035]
In addition, when the bulk cargo ship 1 may call at a port where the on-shore facility is equipped with no air drying facility or air-feeding system, it is preferable that an air drying facility or an air-feeding system that has a capacity of unloading at least one or two cargo holds 10 may be provided in the bulk cargo ship 1 so that the bulk cargo ship 1 can perform cargo handling by itself in such a port.

In addition, one or multiple discharge ports 15 are provided for each cargo hold 10 (four in the cases of Fig. 1 to Fig. 8). Providing a plurality of discharge ports 15 enables the height of the inclined portion 12 around the discharge port 15 to be lowered, compared with a case where a single discharge port 15 is provided. In this way, the center of gravity of the cargo hold 10 as well as the center of gravity of the entire cargo hold 10 with the polymer pellets loaded therein can be lowered. Therefore, a degree of deterioration of the stability performance can be reduced although the position of the center of gravity becomes high and stability performance against roll of the ship body deteriorates when polymer pellets having a small bulk specific gravity is loaded. In this way, lowering of the center of gravity and the stability performance against roll of the ship body can be ensured. In addition, the height of the inclined portion 12 is lowered, so that dead space formed around the outer side of the inclined portion 12 can be reduced.

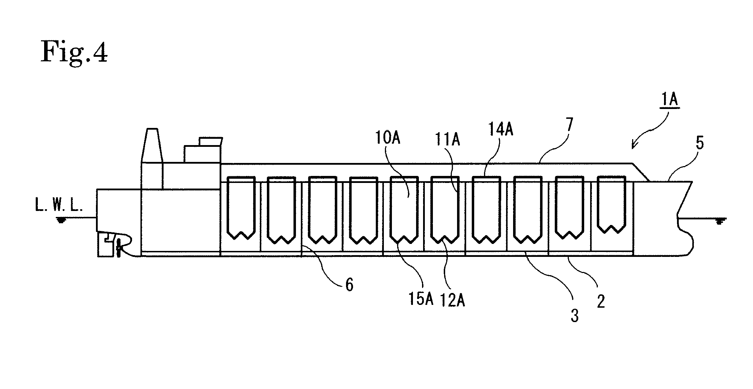

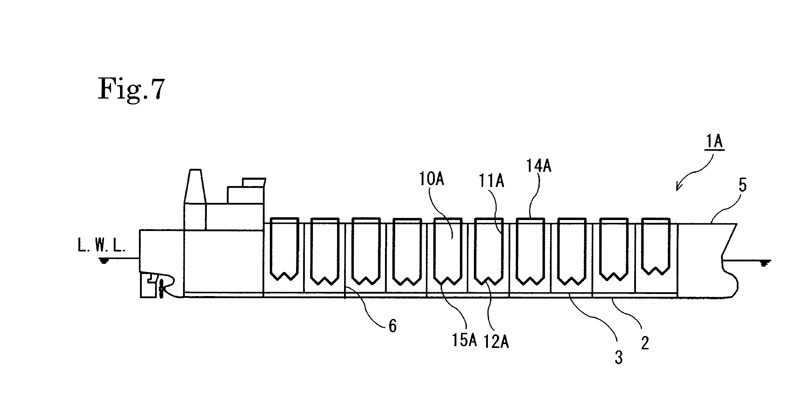

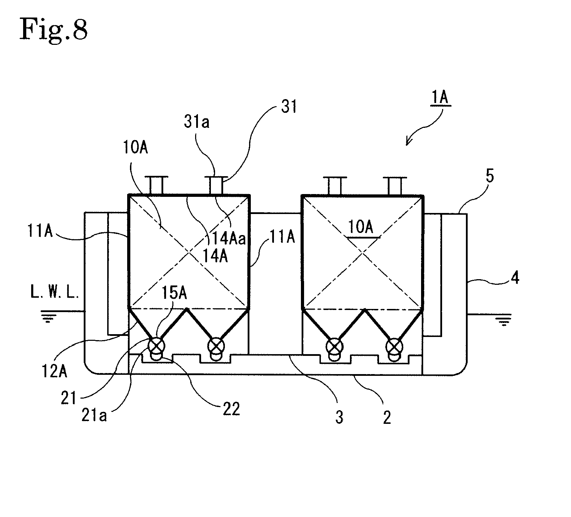

Next, a bulk cargo ship of separated hold type will be described. As shown in Fig. 4 to Fig. 8, a bulk cargo ship 1A is configured by including cargo holds 10A in which polymer pellets are loaded, as similar to the bulk cargo ship 1 of one unit type. However, in the bulk cargo ship 1A of separated hold type, each of the cargo holds 10A is formed as a separate hold, and the cargo holds 10A of the separated hold structure are installed in the ship body. Note that, the bulk cargo ship 1A shown in Fig. 7 and Fig. 8 has a structure in which a covering structure 7 is not provided over the upper portion of the cargo holds 10A in the bulk cargo ship 1A shown in Fig. 4 to Fig. 6.

As shown in Fig. 4 to Fig. 8, each cargo hold 10A is formed as a section surrounded by sidewall portions 11A, a ceiling portion 14A and inclined portions 12A. Each of the sidewall portions 11A is formed to extend vertically, and the ceiling portion 14A has an inlet port 14Aa for loading the polymer pellets. In addition, the inclined portions 12A is narrowed down to a discharge port 15A for discharging. A cargo hold wall is constituted of the inclined portions 12A, the sidewall portions 11A and the ceiling portion 14A.

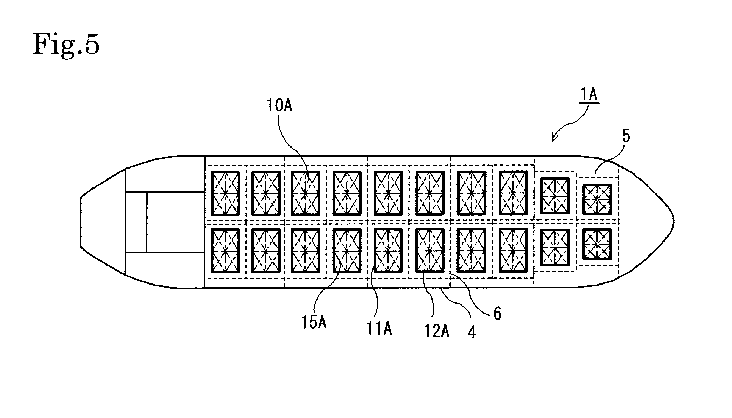

The horizontal cross-sectional shape of each cargo hold 10A is formed, in Fig. 5, into a rectangle capable of being easily provided with a plurality of discharge ports 15A. However, since each cargo hold 10A is a separated hold structure, the shape may be a circle, an oval, an ellipse, or the like. In addition, when each cargo hold 10A has a plurality of discharge ports 15A, the discharge ports 15A may be arranged in the fore-aft direction of the ship body, the lateral direction of the ship body, or any other directions. However, the discharge ports 15A are arranged in conformity with the arrangement of the gas transport pipe 22.

In addition, in the same manner as in the case of the cargo hold 10 of one unit type, the cargo hold wall of each cargo hold 10A is provided with no frame member protruding toward the inside and all of the frame member of the cargo hold wall are disposed outside the cargo hold 10A. With this configuration, the inner surface of the cargo hold 10A is formed smoothly.

By employing this separated hold system in which each of the cargo holds 10A is manufactured as a separate body and is installed in the ship body, a cargo hold can be installed in a ship body after a part which constitutes the cargo hold and which is formed of a rust-resistant material is manufactured separately from the ship body. Particularly, consider a case where the cargo hold wall of each cargo hold 10A is formed by using a special steel material such as clad steel as a rust-resistant material. In this case, the manufacture of a bulk cargo ship is extremely facilitated by separately manufacturing each cargo hold 10A and by installing, in the ship body, the cargo hold 10A in which a part formed of the rust-resistant metal is almost completed. In addition, it is also made possible to employ a cargo hold 10A formed of a non-metal material such as FRP as the rust-resistant material.

Moreover, each cargo hold 10A is protruded from the upper deck 5, and a portion between the sidewall portion 11A of each cargo hold 10A and the upper deck 5 is formed to have a watertight or weathertight structure. In this way, the manufacturing cost can be reduced because the steel materials for the ship body structure are reduced, compared with a configuration where the upper deck 5 is made to be the upper structure of each cargo hold 10. In addition, this structure is simplified compared with a structure in which each cargo hold 10 is completely covered with the upper deck 5 or a hatch cover (not illustrated) . Accordingly, the weight of the ship body can be reduced and the center of gravity of the ship body can be lowered. As a result, the stability performance against roll of the ship body can be easily ensured.

It should be noted that, since the upper portion of each cargo hold 10A is exposed, rise in temperature inside the cargo hold 10A should be taken into consideration, and heat protection using heat barrier coating or the like may be performed.

In addition, as shown in Fig. 4 to Fig. 6, it is preferable that the moisture prevention effect for the polymer pellets that are not desired to be exposed to moisture by providing the covering structure 7 on the upper portions of the cargo holds 10A so that the ceiling portion 14A of each cargo hold 10A should not be exposed to the atmosphere.

The other configurations are the same as those of the bulk cargo ship 1 of one unit type, such as the arrangement of the multiple cargo holds 10A in the fore-aft direction and in the lateral direction; the spaced arrangement from the ballast tank and the like; the use of clad steel; the inlet port 14Aa in the upper portion of each cargo hold 10A and the inlet pipe 31 for cargo loading; the discharge port 15A in the discharge portion provided with the inclined portion 12A in the lower portion of each cargo hold 10A, the constant-flow discharge valve 21a, the discharge pipe 21, and the gas transport pipe 22; and the feeding method of the dried air A; and the like.

Then, the waterborne transportation method for polymer pellets of the embodiment of the present invention will be described. The waterborne transportation method for polymer pellets is a waterborne transportation method for polymer pellets which uses the above-described bulk cargo ship 1, 1A, and a method of performing cargo loading and cargo unloading as described below.

With reference to Fig. 9, the cargo loading and cargo unloading will be described. First, the cargo loading is performed as follows. The cargo loading pipe 52 is connected to a lower portion of a polymer pellet storage tank 51 of an on-shore loading equipment 50 in the on-shore cargo handling equipment and to the inlet pipe 31 provided in the ceiling portion 14A of the cargo hold 10A in the bulk cargo ship 1A. After that, the dried air A is fed from a loading air feeding system 53 to transport polymer pellets B by gas transport to the inlet port 14A at the end of the inlet pipe 31. The polymer pellets B transported to the inlet port 14A are stored in the cargo hold 10A by free fall.

After the polymer pellets B are stored in each cargo hold 10A, the inlet pipe 31 is closed. After that, the cargo loading pipe 52 is detached and the cargo loading for the cargo hold 10A is completed. After the cargo loading for each cargo hold 10A is completed, the ship is prepared for departure, and then is sailed.

Next, the cargo unloading will be described. After the ship comes into a port, an air inflow pipe 62 connected to an unloading air feeding system 61 of on-shore unloading equipment 60 in the on-shore cargo handling equipment is connected to an air feeding port 23 (at an upper position of the side face of the upper portion of the ship body in Fig. 9) of the bulk cargo ship 1A. In addition, an unloading pipe 64 connected to an upper portion of a temporary storage tank 63 is connected to a cargo discharge port 24 (at a lower position of the side face of the upper portion of the ship body in Fig. 9) of the bulk cargo ship 1A.

After the connection, the unloading air feeding system 61 is driven to feed the dried air A from the air feeding port 23 to the gas transport pipe 22, and the polymer pellets B are supplied from the discharge port 15A of the cargo hold 10A to the gas transport pipe 22 with the flow rate adjusted by means of the constant-flow discharge valve 21a. In this way, the polymer pellets B are conveyed by gas transport to the temporary storage tank 63 through the gas transport pipe 22, the cargo discharge port 24, and the unloading pipe 64.

From this temporary storage tank 63, a storage air feeding system 65 is driven to convey the polymer pellets B to the upper portion of a storage tank 67 through a storage pipe 66, thereby storing the polymer pellets B in the storage tank 67. The polymer pellets B stored in this storage tank 67 are conveyed to various sites by a freight car 68 or the like.

After the polymer pellets B in the cargo hold 10A are unloaded, the flow of the air feeding port 23 is closed. After that, the unloading pipe 64 is detached and the cargo discharge port 24 is closed. In this way, the cargo unloading is completed and the ship is prepared for departure, and then is sailed.

According to the above-described waterborne transportation method for polymer pellets, polymer pellets can be transported in bulk state without damaging the polymer pellets, while such polymer pellets have been packed in bags and transported using containers in order to avoid damage and contamination in the conventional art. In addition, the operation of packing particulates in bags, the operation of loading the bags into containers, the operation of taking the particulates out of the bags, and other operations that have been performed in the conventional art can be eliminated, so that the operation efficiency at the time of transport can be improved.

In addition, when a bulk cargo barge that has the same configuration of cargo holds 10, 10A as that of the above-described bulk cargo ships 1, 1A and has no propulsion system is used, the same effects as those in the case of using the above-described bulk cargo ships 1, 1A can be achieved.

### INDUSTRIAL APPLICABILITY

The waterborne transportation method for polymer pellets according to the present invention can achieve the above-described effects, and therefore, can be used as a waterborne transportation method replacing the waterborne transportation method for polymer pellets of the conventional art in which polymer pellets are packed in bags and transported using containers in order to avoid damage and contamination.

### EXPLANATION OF REFERENCE NUMERALS

- 1, 1A: bulk cargo ship
- 10, 10A: cargo hold
- 11, 11A: sidewall portion
- 12, 12A: inclined portion
- 13: inclined portion in upper portion at ship lateral side
- 14, 14A: ceiling portion
- 14a, 14Aa: inlet port
- 15, 15A: discharge port
- 21: discharge pipe
- 21a: constant-flow discharge valve
- 22: gas transport pipe
- 23: air feeding port
- 24: cargo discharge port
- 31: inlet pipe
- 50: on-shore loading equipment
- 51: polymer pellet storage tank
- 52: cargo loading pipe
- 53: loading air feeding system
- 60: on-shore unloading equipment
- 61: unloading air feeding system
- 62: air inflow pipe
- 63: temporary storage tank
- 64: unloading pipe
- 65: storage air feeding system
- 66: storage pipe
- 67: storage tank
- 68: freight car
- A: dried air
- B: polymer pellets

## Claims

1. A waterborne transportation method for polymer pellets, **characterized by** comprising, in waterborne transportation of polymer pellets, storing the polymer pellets in bulk state in a cargo hold of any one of a ship and a barge, and then transporting the polymer pellets.

2. The waterborne transportation method for polymer pellets according to claim 1, **characterized by** comprising performing:
cargo loading in which polymer pellets are dropped down through an inlet port provided in an upper portion of the cargo hold, thereby being stored in the cargo hold; and
cargo unloading in which the polymer pellets are discharged to a gas transport pipe by a valve from a discharge portion being provided in a lower portion of the cargo hold and each having an inclined portion, and are then transported together with gas to on-shore cargo handling equipment through the air transport pipe.

3. The waterborne transportation method for polymer pellets according to any one of claim 1 or 2, **characterized in that** the polymer pellets are stored in bulk state in the cargo hold and then transported, the cargo hold being formed in such a manner that a cargo hold wall, with which the polymer pellets come into contact, of the cargo hold is formed smoothly while no frame member protruding toward an inside of the cargo hold is provided on the cargo hold wall, and that a discharge port having an inclined portion is provided in a lower portion of the cargo hold.

4. The waterborne transportation method for polymer pellets according to any one of claims 1 to 3, **characterized in that** the polymer pellets are discharged to the gas transport pipe by valves from a plurality of discharge portions being provided in a lower portion of the cargo hold.

5. The waterborne transportation method for polymer pellets according to any one of claims 1 to 4, **characterized in that** the polymer pellets are stored in the cargo hold and then transported, the cargo hold having a cargo hold wall having such a structure as not to come into contact with liquid.
